# EUROPEAN PATENT APPLICATION

(11) **EP 4 498 135 A1**
(43) Date of publication of application: **29.01.2025**
(21) Application number: 23188034.5
(22) Date of filing: 27.07.2023
(51) Int. Cl.: G02B 6/028, G02B 6/14, G02B 6/42, G02B 6/255

(54) **OPTICAL ARRANGEMENT FOR COUPLING LIGHT WITH REDUCED POWER VARIANCES INTO AN OPTICAL RECEIVER**

(71) Applicant: Airbus S.A.S., 31700 Blagnac (FR)
(72) Inventor: TEPPER, Jan, 82024 Taufkirchen (DE)
(74) Representative: OTN Airbus SAS

(57) **Abstract**

An optical arrangement (100) for coupling light with reduced power variances into an optical receiver (200) is provided. The optical arrangement (100) comprises a multi-mode fiber (110), a single-mode fiber (120), and a fiber mode scrambler (130). The multi-mode fiber comprises a first core (113) having a first core diameter (114), a first input end (111), and a first output end (112); The single-mode fiber (120) comprises a second core (123) having a second core diameter (124), a second input end (121), and a second output end (122). The first input end (111) is configured to receive a light beam (310) from a sender (300) external to the optical arrangement (100). The second output end (122) is configured to be coupled to an optical input (210) of the receiver (200). The first output end of the multi-mode fiber (110) is coupled to the second input end (121) of the single-mode fiber (120). The fiber mode scrambler (130) is attached to the multi-mode fiber (110), such that a stabilized equilibrium mode distribution of the light received at the first input end (111) is generated within the multi-mode fiber (110). Further, a system (500) comprising such an optical arrangement (100) and a vehicle (400) comprising such an optical arrangement (100) is provided.

## Description

### TECHNICAL FIELD

The present disclosure relates to an optical arrangement for coupling light with reduced power variances into an optical receiver as well as to a system and a vehicle comprising such optical arrangement.

### TECHNICAL BACKGROUND

Free-space optical systems are known, for example, for free-space optical communications or for LIDAR (LIght Detection and Ranging) applications. Free-space optical communications may, for example, be used to establish optical communication links between two entities such as between two vehicles (for example between two aircrafts), between ground stations and satellites, or between any other two entities. For this, a sender of information emits a light beam that is directed towards an optical receiver. The light beam carries data bits that are imprinted onto the light beam, for example, in the form of light pulses or analog signal shapes that are able to carry the information. The receiver captures the light beam by means of an optical fiber which directs the light into an optical input terminal of an underlying electronic receiver system. The electronics of the receiver evaluates the received light beam to extract the information encoded in the light beam by the sender, for example, in the form of digital or analog signal shapes that carry data bits. In order to extract the data carried by the light beam, the single bits need to be distinguished from each other.

Optical fibers in general are known in the form of single-mode fibers and multi-mode fibers. Single-mode fibers have a smaller core diameter than multi-mode fibers, thereby allowing them to transmit only a single mode of light (at least for light above a certain cutoff wavelength). Multi-mode fibers, on the other hand comprise a larger core diameter and are able to transmit multiple higher order modes of the light.

Optical communications hardware usually is configured to receive light from a single-mode fiber. However, especially in free-space optical systems, the light beam from the sender needs to be directed towards the input end of the optical fiber to the receiver in a very precise manner in order to achieve an optimum coupling into the fiber. This is complicated by the fact that the sender as well as the receiver are not necessarily fixed in space. Further, turbulence and environmental conditions influence the propagation of the light beam through free-space (i.e., for example via air or vacuum (depending on the use case) and not through physical coupling means such as optical fibers). This leads to a certain jitter of the light beam which, especially because of the relatively small core diameters of single-mode fibers, makes it very difficult to accurately direct the beam onto the input end of the optical fiber of the receiver. Direct free-space coupling to the single-mode fiber therefore is highly fluctuating because the beam might not be centered onto the ∼10 µm core of the single-mode fiber and because the wavefront is distorted which leads to an increased spot diameter in the focal plane which is bigger than the core of the single-mode fiber. Without any remedy, this leads to high power fluctuations in the single-mode fiber that causes so called deep fades such that the received power at times falls below a detector threshold causing high bit error rates (BER) because certain bits cannot be detected.

Currently, there are mainly two solutions utilized for this problem, which both are active systems that need feedback: Fast Steering Mirrors (FSM) or Adaptive Optics (AO). In the FSM solution, the angular offset of the incoming beam onto a photodetector is measured and the FSM uses tip and tilt to correct for the detected offset and centers the beam onto the fiber. Further, because of the atmosphere, higher order wavefront errors can occur. For the correction of this errors, AO is used. The higher order wavefront errors can only be measured by wavefront sensors and corrected by deformable mirrors. Although such high-end systems can be very efficient in achieving high and stable coupling, they are bulky and very expensive and typically used in astronomical telescopes.

Therefore, from a point of view of coupling light into the fiber, multi-mode fibers would be preferred because they comprise a higher numerical aperture and the light beam can be directed onto the fiber much easier in a way that the full light beam is captured because of the larger core diameter. However, the receiver electronics usually only supports single-mode fibers (especially, fiber amplifiers are preferably used which only operate on single-mode fibers). Further, coupling light directly from a multi-mode fiber into a single-mode fiber is problematic because the transition between the fibers causes high loses. Further, the uneven mode distribution especially in short multi-mode fibers, that in particular depends on the launch conditions into the fiber, makes coupling of light from the multi-mode fiber into the single mod-fiber unpredictable.

### DESCRIPTION

It is an objective to provide an optical arrangement for coupling light into a receiver electronics for free-space optical systems, in particular into receiver electronics utilizing single-mode fibers, that decreases a bit error rate (BER) without the need for feedback or active systems.

This objective is solved by the subject matter of the independent claims. Further embodiments are described in the dependent claims as well as in the following description.

According to a first aspect, an optical arrangement for coupling light with reduced power variances into an optical receiver is provided. The optical arrangement comprises a multi-mode fiber, a single-mode fiber, and a fiber mode scrambler. The multi-mode fiber comprises a first core having a first core diameter, a first input end, and a first output end. The single-mode fiber comprises a second core having a second core diameter, a second input end, and a second output end. The first input end is configured to receive a light beam from a sender external to the optical arrangement. The second output end is configured to be coupled to an optical input of the receiver. The first output end of the multi-mode fiber is coupled to the second input end of the single-mode fiber. The fiber mode scrambler is attached to the multi-mode fiber, such that a stabilized equilibrium mode distribution of the light received at the first input end is generated within the multi-mode fiber.

The optical arrangement basically allows to utilize a multi-mode fiber for receiving a light beam from a sender for further processing of the light beam by the electronics of an optical receiver that needs input from a single-mode fiber. Because of the larger core diameter of a multi-mode fiber than of a single-mode fiber, precisely directing and centering of the light beam from the sender onto a receiver terminal (which is built by the first input end of the multi-mode fiber) is facilitated, thereby at least reducing the need for feedback systems such as FSM or AO or, in at least some cases, eliminate it altogether. Further, the larger core diameter also accommodates increased spot diameters because of wavefront distortions.

The invention is based on the surprising and unintuitive discovery that for reducing the bit error rate (BER) of an optical communications link (such as for example in Laser communication links from e.g., LEO (Lower Earth Orbit) to ground or from aircraft to aircraft) reducing power fluctuations within the fiber system of the receiver in many cases is more important than reducing overall power losses. In particular, using the fiber mode scrambler to equalize the mode distribution within the multi-mode fiber is essential for the invention to allow to use such a multi-mode fiber in the first place. Using multi-mode fibers in such systems that utilize electronic equipment requiring single-mode fiber input in the past has not been possible for various reasons.

Because multi-mode fibers are able to transmit not only the fundamental mode of light but also higher order modes and each of these guided modes has its own distinct propagation velocity within the fiber (modal dispersion), usually an uneven modal distribution prevails within a multi-mode fiber (especially in relatively short fibers, as preferably used with the optical arrangement described herein), that in particular depends on the coupling conditions into the multi-mode fiber. In particular for free-space communications applications, these coupling conditions change strongly. This makes direct coupling of light from the multi-mode fiber into the single-mode fiber (without using a mode scrambler, as described herein) unpredictable because it depends on the coupling conditions into the multi-mode fiber, which are, in general, not always constant. This is in particular the case in highly dynamic environments such as those around aircrafts or satellites.

In general, as light travels through a multi-mode optical fiber, different fiber modes are attenuated at different rates, with the optical power in the higher-order modes decaying at a greater rate than the power in low-order modes. In addition, perturbations of the fiber waveguide, whether "intrinsic" (e.g., perturbations of the refractive index or core diameter) or "extrinsic" (e.g., deviations of the fiber from straightness), will cause light scattering and redistribution of the power among the guided modes of the fiber. This phenomenon is called mode coupling. Mode coupling also causes power transfer from higher-order guided modes to radiation modes and is the reason that modes of higher order experience greater losses than modes of lower order.

Over time (or rather after a certain length of travel for the light within a multi-mode fiber, which can account to multiple kilometers), a power distribution develops in the multi-mode fiber which is independent of the initial modal distribution caused by the light-launch conditions. The power in each mode remains constant with respect to the power in the other guided modes as the light continues to propagate down the fiber. This is the so called "stable distribution" or "stabilized equilibrium mode distribution".

However, longer fibers in general generate greater losses. Further, long fibers (in particular in the range of multiple kilometers) increase weight and the necessary space requirements. This is in particular unfavorable in applications such as aircrafts or satellites, where weight reduction in general is one of the main constraints for any system.

For these reasons, in the past multi-mode fibers could not be used for free-space communications, LIDAR, and other similar free-space optical systems.

The present invention utilizes a fiber mode scrambler to also achieve the stabilized equilibrium mode distribution described above within relatively short multi-mode fibers, thereby achieving predictable modal distributions within the multi-mode fiber that enable coupling of the multi-mode fiber to the single-mode fiber under known conditions that only depend on the fibers itself. Since the multi-mode fiber can capture the full light of the light beam more easily as a single-mode fiber (because of the larger core diameter), in particular without the need for feedback systems such as FSM or AO, power variances within the received light beam at the receiver are reduced. In particular, deep fades of the received signal are avoided and therefore the BER is reduced.

The fiber mode scrambler is used to increase mode coupling within the multi-mode fiber. The fiber mode scrambler may, for example, use a precision translation stage to press a short length of multi-mode fiber between specially designed surfaces that introduce microbending in the fiber. This greatly increases coupling among the guided modes and radiation modes of the fiber. Optionally, the fiber mode scrambler may also include a mode filter when mainly high-order modes have been launched into the multi-mode fiber. The fiber mode scrambler repeatably achieves a stable modal distribution in the fiber without requiring kilometers of intervening fiber, which is necessary for accurately evaluating the light beam by the receiver electronics.

Fiber mode scramblers are in principle known in the art. However, they are usually only used to measure properties of multi-mode fibers in a repeatable way. Because of the induced losses, fiber mode scramblers previously have not been used when the multi-mode fibers are actually in the intended use. However, in the present invention it has been surprisingly detected that reducing power fluctuations within the fiber system of the receiver in many cases is more important than reducing losses of the average coupled power and therefore may be advantageous in certain use cases.

According to an embodiment, the stabilized equilibrium mode distribution is a mode distribution within the multi-mode fiber wherein different modes of the transmitted light exhibit a homogeneous and well defined distribution.

According to a further embodiment, the single-mode fiber and/or the multi-mode fiber comprises a step-index fiber.

In general, an optical fiber at least comprises a core and a cladding. The refractive index of the cladding is lower than the refractive index of the core. When light above a certain critical angle impinges from inside the core onto the boundary surface between the core and the cladding, total internal reflection occurs, thereby guiding the light through the fiber. Step-index fibers comprise exactly two different and constant refractive indices, the refractive index of the core and the refractive index of the cladding.

According to a further embodiment, the single-mode fiber and/or the multi-mode fiber comprises a graded-index fiber.

Graded-index fibers are similar to step-index fibers in that the refractive index of the cladding is lower than that of the core. However, the refractive index of the core is not constant but instead continuously decreases radially outwards until at the boundary surface it equals the refractive index of the cladding. This leads to "bending" of the light beam within the core. Graded-index fibers have the advantage that modal dispersion is reduced because light rays travelling along the fiber and within the core radially further outwards propagate faster along the fiber and therefore can "catch up" to light rays travelling along the fiber within the core further inwards. Therefore, graded-index fibers are advantageous to achieve a stabilized equilibrium mode distribution.

According to a further embodiment, the first core diameter of the first core of the multi-mode fiber and the second core diameter of the second core of the single-mode fiber are dimensioned such that a compromise between the transmission loss from the multi-mode fiber to the single-mode fiber and the light capture of the multi-mode fiber is achieved, so that a bit error rate (BER) is minimized.

When transitioning from the multi-mode fiber to the single-mode fiber, the incurred losses roughly correspond to the square of the ratio of the core diameters of the multi-mode fiber and the single-mode fiber. Therefore, the higher the ratio of the first core diameter to the second core diameter, the higher the losses. For example, the second core diameter of the single-mode fiber may be in the range between 8 to 10 µm. The first core diameter of the multi-mode fiber may, for example, be in the range between 45 to 65 µm. However, any other suitable core diameters may be implemented, in particular also smaller core diameters than the given ranges. Typically, the second core diameter of the single-mode fiber is given by the receiver (or rather by its optical input). Hence, the ratio of the core diameters and with it the transmission loss can be influenced by adjusting the first core diameter of the multi-mode fiber.

In order to increase the probability to capture the full light beam (and therefore to reduce power fluctuations) even when jitter occurs, when the spot size of the light beam is enlarged, or when the light beam is not perfectly centered onto the first input end, a large first core diameter of the multi-mode fiber would be preferable. However, the larger the first core diameter, the larger the transition losses between the fibers. Therefore, an optimization, for example using a computer simulation, a numerical calculation, a model, or any other suitable optimization procedure may be performed to find an optimum value of the first core diameter. Although minimizing power fluctuations has the biggest influence on the BER, transition losses also have at least some influence, in particular because the average power received at the optical input of the receiver is reduced when transition losses are increased. Therefore, an optimum value of the first core diameter exhibiting the lowest bit error rates may be achieved by means of such an optimization.

According to a further embodiment, the bit error rate (BER) is minimized by minimizing fluctuations of the light beam at the optical input of the receiver under the constraint of minimizing the transition loss from the multi-mode fiber to the single-mode fiber, so that an overall system performance is increased.

Minimizing fluctuations of the light beam at the optical input of the receiver is achieved by maximizing the light capture of the multi-mode fiber at the first input end. However, the first core diameter is chosen as small as possible to still ensure full light capture, thereby also keeping transition losses as small as possible. Hence, power fluctuations minimized and with it, for example, the occurrence of deep fade events is less probable. Therefore, falling of the power received at the optical input of the receiver and therefore at a detector of the receiver below its detection threshold is avoided, thereby keeping BER low.

According to a further embodiment, the first core diameter of the first core of the multi-mode fiber is dimensioned in accordance with an expected spot size and in accordance with an expected beam jitter of the incident light beam from the sender.

For example, the first core diameter of the multi-mode fiber may be dimensioned such that it can capture the full spot of the light beam, even if the light beam jitters or is not perfectly centered onto the first input end of the multi-mode fiber.

According to a further embodiment, the first core diameter of the first core of the multi-mode fiber is at least the expected spot size plus the expected root mean square value, RMS value, of the beam jitter of the incident light beam, such that the multi-mode fiber is configured to capture all the light of the light beam at any time.

For example, if the light beam is expected to have a spot size A and the RMS value of the jitter is B, then a first core diameter of the multi-mode fiber of at least A+B would cover the full light beam at any time. In a non-limiting example, if the spot size of the light beam is 15 µm and the RMS value of the jitter is 15 µm (equals +- 7,5 µm maximum deviation in each direction away from the center), the first core diameter may be 30 µm. The first core then would cover the full light beam even in its extreme points of the jittering.

According to a further embodiment, the first core diameter of the first core of the multi-mode fiber equals the expected spot size plus the expected root mean square value, RMS value, of the beam jitter of the light beam, thereby enabling to capture all the light of the light beam while keeping the ratio between the first core diameter of the first core of the multi-mode fiber and the second core diameter of the second core of the single-mode fiber as low as possible to reduce transmission losses.

Such a dimensioning allows to capture the full light beam, as described above, without increasing transition losses unduly.

According to a further embodiment, an optimization of the first core diameter of the first core of the multi-mode fiber is performed by considering average link loss, turbulence strength, and a vibration profile of the optical arrangement as input parameters.

These parameters may all influence the light capture possibilities of the multi-mode fiber. Vibration profiles may include vibration profiles of the receiver and of the sender. For example, in aircraft applications, vibrations profiles and turbulence strength of one or both of the sender aircraft and the receiver aircraft may be considered.

According to a further embodiment, an optimization of the first core diameter of the first core of the multi-mode fiber is performed by considering performance characteristics of further corrective devices in front of the first input end.

Such performance characteristics could, for example, include coarse pointing, fine pointing, AO characteristics (if additionally, to further strengthen robustness of the system, such an AO is used). However, any other performance characteristic may be considered.

According to a second aspect, a system is provided. The system comprises at least one optical arrangement according to any one of the embodiments described herein, and an optical receiver. The second output end of the single-mode fiber of the at least one optical arrangement is coupled to the optical input of the receiver.

The optical arrangement may be configured according to any one of the embodiments described herein. The receiver may be any optical receiver having an optical input, such as devices for free-space optical communications, LIDAR, or any other similar device.

According to an embodiment, the receiver is one of a receiver for free space optical communication and a LIDAR device.

According to a third aspect, a vehicle is provided. The vehicle comprises a hull, at least one optical receiver, and at least one optical arrangement according to any one of the embodiments described herein. The second output end of the single-mode fiber of the at least one optical arrangement is coupled to the optical input of the receiver.

The vehicle may be any vehicle, such as an aircraft, an automobile vehicle, or any other vehicle. Further, term vehicle, as used herein, also includes devices that are usually not necessarily considered to be vehicles, such as satellites, space stations, ground stations, etc.

According to an embodiment, the vehicle is an aircraft. The hull is a fuselage of the aircraft. The first input end of the multi-mode fiber is arranged at an outer surface of the fuselage.

In summary, the present disclosure provides an optical arrangement for a free-space optical system (such as used for free-space optical communication or LIDAR), that enables to accurately point a light beam onto an input of the optical arrangement while at least reducing the need for complicated feedback systems and possibly avoiding such systems altogether. The combination of a multi-mode fiber with a fiber mode scrambler allows to capture more light, thereby minimizing signal fluctuations, which improves the bit error rate without any active beam steering systems at the receiver side.

Although the present disclosure mainly is described with regard to aircraft applications, it should be readily apparent that the disclosed optical arrangement and optical system can be used in any suitable application. Non-limiting examples are ground stations, road vehicles, satellites and any other movable or stationary carrier.

### BRIEF DESCRIOPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: A schematic view of a free-space optical system comprising an optical arrangement for receiving a light beam from a sender at a multi-mode fiber and coupling the light beam into a single-mode fiber.
- **Fig. 2**: A schematic cross-sectional view of a single-mode fiber.
- **Fig. 3**: A schematic cross-sectional view of a multi-mode fiber.
- **Fig. 4**: A time series of a light beam signal within a single-mode fiber without the disclosed optical arrangement.
- **Fig. 5**: A time series of a light beam signal within the single-mode fiber of the disclosed optical arrangement.
- **Fig. 6**: A schematic view of an aircraft comprising a system with an optical arrangement.

### DETAILLED DESCRIPTION

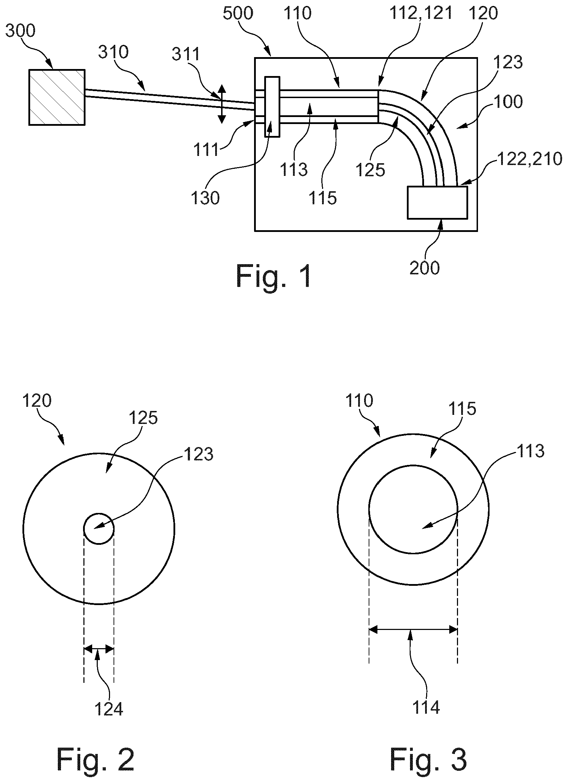

Fig. 1 shows a highly schematic representation of a system 500 for receiving a light beam 310 from a sender 300. The system comprises an optical receiver 200 and an optical arrangement 100 connected to the optical receiver 200, in particular to an optical input 210 of the receiver 200. The receiver 200 receives a light beam 310 from a sender 300 external to the system 500 via the optical arrangement 100.

The optical arrangement 100 comprises a multi-mode fiber 110, a single-mode fiber 120, and a fiber mode scrambler 130. The multi-mode fiber 110 comprises a first input end 111, a first output end 112, a first core 113, and a first cladding 115. The single-mode fiber comprises a second input end 121, a second output end 122, a second core 123, and a second cladding 125. The first output end 112 of the multi-mode fiber 110 is connected to the second input end 121 of the single-mode fiber 120. The connection of the multi-mode fiber 110 to the single-mode fiber 120 may be achieved by any suitable means. In particular, suitable connection hardware (not shown) may be present at the transition point between the fibers 110, 120. The second output end 122 of the single-mode fiber 120 is coupled to an optical input 210 of the receiver 200.

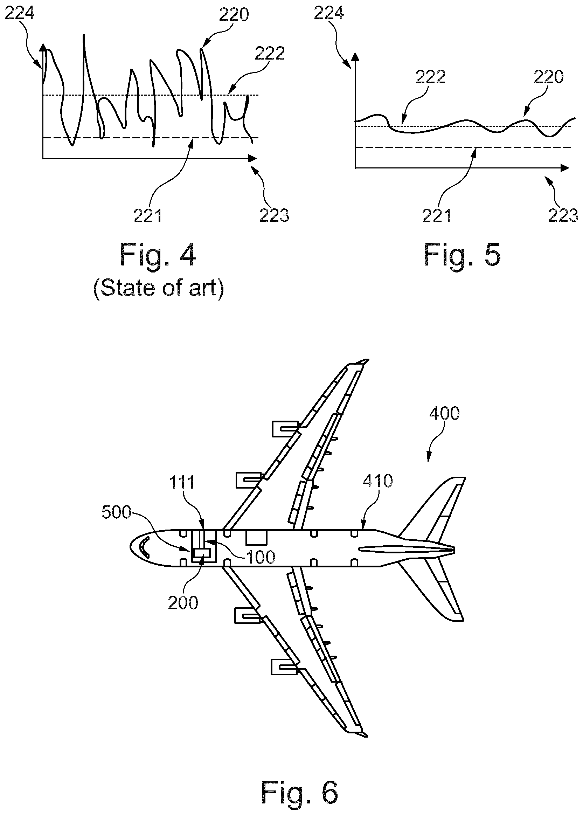

The first input end 111 of the multi-mode fiber 110 is arranged at a surface of a housing of the system 500, which may, for example when the system 500 is incorporated into a vehicle 400 such as an aircraft 400 (see Fig. 6), also be a hull or fuselage 410 of the vehicle 400. However, the system 500 may also be used in other applications, such as in satellites or ground stations thereof. The first input end 111 is accessible from the outside of the system 500 to receive a light beam 310. The optical arrangement 100 transmits the light beam 310 to the receiver 200. The receiver 200 is a receiver device that is capable of receiving and evaluating the light beam 310 transmitted by the optical arrangement 100 to extract data carried by the light beam 310.

The receiver 200 is a receiver that requires input from a single-mode fiber, such as the single-mode fiber 120. In free-space optical systems, such as those used for communication purposes or in LIDAR applications, the light beam 310 needs to be directed to an input end of the receiving fiber, which, because of the requirements of the receiver 200, usually is a single-mode fiber 120. However, such a single-mode fiber 120 comprises a relatively small core diameter (see second core diameter 124 in Fig. 2). Therefore, directing the light beam 310 exactly onto the input end of the single-mode fiber is difficult, in particular, because the light beam 310 propagates in a free-space environment such as air or vacuum and usually at least one of the sender 300 and the receiver 200 (or rather the system 500 or vehicle 400 comprising the receiver 200) is stationary. Also, vibrations and other mechanical influences of the sender 300 and the system 500 as well as environmental conditions (if the light beam 310 propagates through air) may influence the light beam 310. This may for example result in a jitter 311 of the light beam 310, as indicated in Fig. 1 by a double arrow. Further, e.g., environmental conditions may lead to spot widening of the light beam 310. All these effects together with the small core diameter 124 make it very difficult to keep the light beam 310 centered onto the core 123 at all times. Therefore, fluctuations in the signal transmitted by the single-mode fiber 120 and received by the receiver 200 occur, that increase a bit error rate (BER) of the received data, as described herein further above.

To mitigate these effects, in the state of the art usually complicated additional equipment in front of the single-mode fiber 120, such as fast steering mirrors (FSM) or adaptive optics (AO) are used that are based on a feedback loop to steer the light beam 310 onto the core of the fiber. Although such equipment can be very efficient in achieving high and stable coupling, it is also bulky, heavy, and expensive and requires delicate moving parts which can be prone to quicker failure. In principle, by using larger core diameters (i.e., multi-mode fibers), light capture can be improved because, for example, the jitter 311 can be accommodated without feedback systems that actively steer/center the light beam 310 back onto the fiber core. However, because of the requirement for single-mode fiber input of optical receivers 200 in free-space optical systems, the light from such a multi-mode fiber 110 needs to be coupled into a single-mode fiber 120, which in turn transmits the light into the receiver (200). However, multi-mode fibers (especially short fibers) exhibit an uneven mode distribution (as already discussed herein further above) that in particular depends on the launch conditions into the multi-mode fiber 110 (the launch conditions are in particular in highly dynamic environments, such as in aircrafts, satellites, etc. not constant and challenging). This leads to high coupling losses and in particular to unpredictable outputs of the multi-mode fiber 110 when coupling the light from the multi-mode fiber 110 directly into the single-mode fiber 120. Therefore, the problem would only be postponed in such solutions, which therefore could not be used until now.

The present invention is based on the surprising discovery that for reducing the bit error rate reducing fluctuations within the received signal is more important than reducing power losses. However, a predictable modal distribution within the multi-mode fiber 110 is necessary to ensure functionality of the system 500. For this, the fiber mode scrambler 130 is connected to the multi-mode fiber 110 and creates a stabilized equilibrium mode distribution within the multi-mode fiber 110, as described herein further above. The working principle has already been described and will not be repeated. Although fiber mode scramblers are in principle know, up until now they only have been used to create repeatable measurement results when measuring properties of a multi-mode fiber. Fiber mode scramblers have, however, never been used in the actual usage of the multi-mode fibers because of the possible power losses. Further, it therefore has been unintuitive to voluntarily disturb the signal even more because it has not been clear whether it has an advantageous effect. However, the present invention relies on the discovery that using a fiber mode scrambler 130 in the actual usage can actually be advantageous. The fiber mode scrambler 130 can, for example, be arranged at a front end of the multi-mode fiber 110, such that the multi-mode fiber 110 passes through the fiber mode scrambler 130, such that the fiber mode scrambler 130 can act onto the fiber, as described further above.

Using the multi-mode fiber 110 in combination with the fiber mode scrambler 130 as input fiber, a predictable modal distribution is created, thereby enabling the use a multi-mode fiber 110 in the first place. Further, light capture from the light beam 310 is increased even when the light beam 310 fluctuates/jitters. This leads to less power variances within the single-mode fiber 120 and therefore at the receiver 200. Although this approach will not mitigate average loss and might even increase it slightly, the multi-mode fiber 110 collects more light in the first place and the minimization of fluctuations are so large that the overall system performance increases since less deep fades will occur, which are the main sources for the bit error rate (BER). Ideally, the first core diameter 114 (see Fig. 3) of the multi-mode fiber 110 is chosen big enough to capture the full light of the light beam 310 at any time but not larger as necessary. This further ensures to minimize power losses when the light transitions from the multi-mode fiber 110 to the single-mode fiber 120. For this, an optimization procedure may be performed for dimensioning the core sizes, as described further above with regard to some embodiments.

Fig. 2 and 3 show a cross section of a single-mode fiber 120 (Fig. 2) in comparison to a multi-mode fiber 110 (Fig. 3). As will become immediately clear, a light beam 310 can be centered onto the larger core 113 of the multi-mode fiber 110 having the core diameter 114 much easier than onto the smaller core 123 of the single-mode fiber 120 having the core diameter 124.

Fig. 4 shows a time series of a light beam signal 220 within a single-mode fiber 120 of a free-space optical system according to the state of the art without the disclosed optical arrangement 100 of Fig. 1, i.e., without utilizing a multi-mode fiber 110 and a fiber mode scrambler 130. The x-axis is the time axis 223 and the y-axis is the power axis 224 of the power withing the fiber. As can be seen, the light beam signal 220 strongly fluctuates, which is, for example, caused by beam jitter 311 of the light beam 310 (see Fig. 1) because the light beam 310 at times may not be pointed accurately to the core of the single-mode fiber. A detector threshold 221 is indicated above which the signal can be detected by the receiver 200. Further, the average power 222 is indicated. As can be recognized, the light beam signal 220 at times falls below the detector threshold (deep fade). Therefore, the signal sent out by the sender 300 (for example encoded in light pulses) cannot be reconstructed accurately, which leads to high bit error rates (BER).

Fig. 5 shows a time series of a light beam signal 220 within the single-mode fiber 120 of the disclosed optical arrangement 100, utilizing the multi-mode fiber 110 and the fiber mode scrambler 130. As is clearly visible, the fluctuations of the light beam signal 220 are much smaller and in particular, deep fades, that fall below the detector threshold 221 do not occur, although the average power 222 is slightly lower. However, the average power 222 is still big enough to be detected. Therefore, the bit error rate (BER) is greatly reduced.

Fig. 6 schematically shows an aircraft 400 having a fuselage 410, and a system 500 comprising an optical receiver 200 and an optical arrangement 100 according to Fig. 1. The first input end 111 of the multi-mode fiber 110 is arranged at an outer surface of the fuselage 410, thereby enabling a sender 300 to direct a light beam 310 onto the multi-mode fiber 110. Although shown in an aircraft 400, it should be appreciated that the system 500 may also be used in any other vehicle 400 (such as a road motor vehicle) or generally in any other suitable application, such as in satellites and ground stations. The optical arrangement 100 is not shown in detail in Fig. 6 but is only very schematic. Details can be seen in Fig. 1.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 100: optical arrangement
- 110: multi-mode fiber
- 111: first input end (input end of the multi-mode fiber)
- 112: first output end (output end of the multi-mode fiber)
- 113: first core (core of the multi-mode fiber)
- 114: first core diameter (diameter of the core of the multi-mode fiber)
- 115: first cladding (cladding of the multi-mode fiber)
- 120: single-mode fiber
- 121: second input end (input end of the single-mode fiber)
- 122: second output end (output end of the single-mode fiber)
- 123: second core (core of the single-mode fiber)
- 124: second core diameter (diameter of the core of the single-mode fiber)
- 125: second cladding (cladding of the single-mode fiber)
- 130: fiber mode scrambler

- 200: receiver
- 210: optical input (of the receiver)
- 220: light beam signal
- 221: detector threshold
- 222: average power
- 223: time axis
- 224: power axis

- 300: sender
- 310: light beam
- 311: jitter
- 400: vehicle, aircraft
- 410: hull, fuselage

- 500: system

## Claims

1. An optical arrangement (100) for coupling light with reduced power variances into an optical receiver (200), the optical arrangement (100) comprising:
a multi-mode fiber (110) comprising a first core (113) having a first core diameter (114), a first input end (111), and a first output end (112);
a single-mode fiber (120) comprising a second core (123) having a second core diameter (124), a second input end (121), and a second output end (122); and
a fiber mode scrambler (130);
wherein the first input end (111) is configured to receive a light beam (310) from a sender (300) external to the optical arrangement (100);
wherein the second output end (122) is configured to be coupled to an optical input (210) of the receiver (200);
wherein the first output end (112) of the multi-mode fiber (110) is coupled to the second input end (121) of the single-mode fiber (120); and
wherein the fiber mode scrambler (130) is attached to the multi-mode fiber (110), such that a stabilized equilibrium mode distribution of the light received at the first input end (111) is generated within the multi-mode fiber (110).

2. The optical arrangement (100) of claim 1, wherein the stabilized equilibrium mode distribution is a mode distribution within the multi-mode fiber (110) wherein different modes of the transmitted light exhibit a homogeneous and well defined distribution.

3. The optical arrangement (100) of any one of the preceding claims, wherein the single-mode fiber (120) and/or the multi-mode fiber (110) comprises a step-index fiber.

4. The optical arrangement (100) of any one of the preceding claims, wherein the single-mode fiber (120) and/or the multi-mode fiber (110) comprises a graded-index fiber.

5. The optical arrangement (100) of any one of the preceding claims, wherein the first core diameter (114) of the first core (113) of the multi-mode fiber (110) and the second core diameter (124) of the second core (123) of the single-mode fiber (120) are dimensioned such that a compromise between the transmission loss from the multi-mode fiber (110) to the single-mode fiber (120) and the light capture of the multi-mode fiber (110) is achieved, so that a bit error rate, BER, is minimized.

6. The optical arrangement (100) of claim 5, wherein the bit error rate, BER, is minimized by minimizing fluctuations of the light beam (310) at the optical input (210) of the receiver (200) under the constraint of minimizing the transition loss from the multi-mode fiber (110) to the single-mode fiber (120), so that an overall system performance is increased.

7. The optical arrangement (100) of any one of the preceding claims, wherein the first core diameter (114) of the first core (113) of the multi-mode fiber (110) is dimensioned in accordance with an expected spot size and in accordance with an expected beam jitter of the incident light beam (310) from the sender (300).

8. The optical arrangement (100) of any one of the preceding claims, wherein the first core diameter (114) of the first core (113) of the multi-mode fiber (110) is at least the expected spot size plus the expected root mean square value, RMS value, of the beam jitter of the incident light beam (310), such that the multi-mode fiber (110) is configured to capture all the light of the light beam (310) at any time.

9. The optical arrangement (100) of any one of the preceding claims, wherein the first core diameter (114) of the first core (113) of the multi-mode fiber (110) equals the expected spot size plus the expected root mean square value, RMS value, of the beam jitter of the light beam (310), thereby enabling to capture all the light of the light beam (310) while keeping the ratio between the first core diameter (114) of the first core (113) of the multi-mode fiber (110) and the second core diameter (124) of the second core (123) of the single-mode fiber (120) as low as possible to reduce transmission losses.

10. The optical arrangement (100) of any one of the preceding claims, wherein an optimization of the first core diameter (114) of the first core (113) of the multi-mode fiber (110) is performed by considering average link loss, turbulence strength, and a vibration profile of the optical arrangement (100) as input parameters.

11. The optical arrangement (100) of any one of the preceding claims, wherein an optimization of the first core diameter (114) of the first core (113) of the multi-mode fiber (110) is performed by considering performance characteristics of further corrective devices in front of the first input end (111).

12. A system (500), comprising:
at least one optical arrangement (100) of any one of the preceding claims; and
an optical receiver (200);
wherein the second output end (122) of the single-mode fiber (120) of the at least one optical arrangement (100) is coupled to the optical input (210) of the receiver (200).

13. The system (500) of claim 12, wherein the receiver (200) is one of a receiver (200) for free space optical communication and a LIDAR device (200).

14. A vehicle (400) comprising:
a hull (410);
at least one optical receiver (200); and
at least one optical arrangement (100) of any one of claims 1 to 11;
wherein the second output end (122) of the single-mode fiber (120) of the at least one optical arrangement (100) is coupled to the optical input (210) of the receiver (200).

15. The vehicle (400) of claim 14, wherein the vehicle (400) is an aircraft (400);
wherein the hull (410) is a fuselage (410) of the aircraft (400); and
wherein the first input end (111) of the multi-mode fiber (110) is arranged at an outer surface of the fuselage (410).
